# EUROPÄISCHE PATENTSCHRIFT

(11) **EP 1 607 459 B1**
(45) Veröffentlichungstag und Bekanntmachung des Hinweises auf die Patenterteilung: **30.09.2009**
(21) Anmeldenummer: 05104943.5
(22) Anmeldetag: 07.06.2005
(51) Int. Cl.: C09J 7/04, D01F 1/04, D01F 1/06, B60R 16/02

(54) **Kabelbaum, sowie Verwendung eines technischen Klebebandes zum Ummanteln desselben**
Cable harness and use of a technical adhesive tape for sheathing the same
Faisceau de câbles et utilisation d'un ruban adhésif technique pour son enrobage

(30) Priorität: 15.06.2004 DE 102004028825
(43) Veröffentlichungstag der Anmeldung: 21.12.2005
(73) Patentinhaber: Coroplast Fritz Müller GmbH & Co. KG, 42279 Wuppertal (DE)
(72) Erfinder: Lodde, Christoph Coroplast Fritz Müller GmbH & Co., 42279, Wuppertal (DE); Celik, Gülay, 44799, Bochum (DE)
(74) Vertreter: Patentanwälte Dr. Solf & Zapf

(56) Entgegenhaltungen:
- EP-A- 0 995 782
- EP-A2- 1 329 491
- WO-A-03/033611
- "Duden Wörterbuch, Stichwort "PVC"" 1996, BROCKHAUS AG , MANNHEIM
- 'Kurzzeichenaufbau für Fahrzeugleitungen bei GEBAUER & GRILLER (gemäss DIN 76 722)'
- FISCHER-BOBSIEN C H: "LEXIKON TEXTILVEREDLUNG UND GRENZGEBIETE" 1960, FISCHER-BOBSIEN, DÜLMEN-DALDRUP * Seite 1839 *
- BERNET H.: "Farbstoffe: eine Übersicht" 2001, BAYER AG , LEVERKUSEN * Seite 11 - Seite 12 * * Seite 19 - Seite 22 *
- Gefunden im Internet: <URL:http://de.wikipedia.org/wiki/Komplexch emie>

## Beschreibung

Die Erfindung betrifft einen Kabelbaum, bestehend aus mit jeweils einem Mantel versehenen Adern, die mit einem technischen Klebeband umwickelt sind, wobei das Klebeband einen bandförmigen, textilen, gefärbten Träger, der aus Fäden oder Fasern gebildet ist, die unter Zugabe von Farbpigmenten in ein Extrudat eines Polymers hergestellt sind, und eine ein- oder beidseitig auf den Träger aufgetragene Klebebeschichtung aufweist. Des Weiteren betrifft die Erfindung die Verwendung eines derartigen technischen Klebebandes zur Herstellung des Kabelbaums.

Für technische Klebebänder, die insbesondere im Kabelwickelbereich Verwendung finden können, werden zurzeit überwiegend Trägermaterialien aus Zellwoll-Gewebe, Polyestergewebe oder Vliesen eingesetzt.

Zellwoll-Gewebeklebebänder haben den Nachteil, dass sie verrottbar sind und nur eine begrenzte Temperaturbeständigkeit bis zu etwa 100 °C besitzen. Hierbei ist es üblich, das Trägermaterial mit Dispersionsfarbstoffen, insbesondere schwarz, einzufärben. Eine bei höheren Temperaturen eintretende Alterung führt bei diesen bekannten Bändern nachteiligerweise sowohl zu einer Minderung der Farbqualität, als auch vor allem zu einer Zersetzung des Trägermaterials und kann die Kompatibilität des Bandes mit zu umwickelnden Leitungen beeinträchtigen.

Polyester-, insbesondere PET-Gewebeklebebänder sind unverrottbar und weisen gegenüber Zellwoll-Gewebeklebebändem eine wesentlich höhere Reißfestigkeit und eine höhere Temperaturbeständigkeit auf. Um die für den Einsatz als Kabelwickelband in der Automobilindustrie in den meisten Anwendungsfällen erwünschte schwarze Farbe zu erhalten, werden die Gewebe mit Dispersionsfarbstoffen eingefärbt. Bei Temperaturlagerungen oberhalb 125 °C beobachtet man dabei eine Migration des Dispersionsfarbstoffes oder dessen Komponenten aus dem Gewebe, was zu einer Farbveränderung des Gewebes und unter Umständen auch der umwickelten Leitungen führt. Die migrierten Stoffe können auch, je nach der chemischen Natur des eingesetzten Isolationswerkstoffes, die technischen Eigenschaften der Leitung, wie Reißdehnung oder thermische Stabilität, beeinträchtigen.

Vliese, die bekanntermaßen ebenfalls als Trägermaterial für technische Klebebänder, insbesondere Kabelwickelbänder, eingesetzt werden, bestehen überwiegend ebenfalls aus Polyester. Es werden dabei aus Endlosfilamenten hergestellte Spinnvliese und aus Stapelfasern definierter Länge hergestellte Spinnfaservliese unterschieden. Die Vliese können mit unterschiedlichen Methoden, wie Nähen, Nadeln, Prägen oder mit Hilfe eines Wasserstrahls verfestigt werden. Auch Vliesstoffe werden mit Dispersionsfarbstoffen eingefärbt. Bei Temperaturlagerungen oberhalb 125 °C beobachtet man bei den dispersionsgefärbten Materialien ebenfalls eine Migration des Dispersionsfarbstoffes aus der Faser heraus, die potentiell zu den gleichen negativen Auswirkungen auf die Kompatibilität mit der umwickelten Leitung führen kann, wie sie vorstehend für die Gewebe beschrieben sind.

Bei der - kontinuierlich (z.B. im Thermosolverfahren mit integriertem Foulard) oder diskontinuierlich (sogenannte Baumfärbung oder unter Verwendung eines "Hochdruck-Jiggers") ablaufenden - Dispersionsfärbung wird weißes Gewebe in einem Tränkbad mit einem Farbstoff beaufschlagt. Dabei werden Dispergiermittel als Hilfsstoffe eingesetzt, um eine gleichmäßige Verteilung der Farbstoffe in der Dispersion zu erhalten. Der Farbstoff legt sich bei diesem Färbeverfahren zunächst um die Faser, um dann unter dem Einfluß von Wärme und/oder Druck in sie einzudringen. In Vorbereitung auf den eigentlichen Färbeprozeß kann zur Erleichterung des Eindringens ein Entschlichten bzw. Entfernen von Ölen und/oder eine Vorfixierung des Gewebes stattfinden. Bei der kontinuierlichen Färbung im Thermosolverfahren ist ein thermischer Fixiervorgang der Färbung nachgelagert.

Bei einer sogenannten "Schnellfärbung" werden kleine Farbmoleküle eingesetzt, während bei einer sogenannten "Normalfärbung" vergleichsweise größere Farbmoleküle im Farbstoff enthalten sind. Bei der Schnellfärbung können in Kombination mit den Farbmolekülen zur Anwendung kommende Carrier, wie Benzolen, Phenyl-Phenole oder Dikarbonsäureester, als Farbbeschleuniger dienen, die eine zusätzliche, gewebeerweichende Wirkung aufweisen. Die oben beschriebenen Nachteile der dispersionsgefärbten Trägermaterialien, nämlich, daß sich diese bei hohen Temperaturen entfärben und niedermolekulare Bestandteile aus dem Gewebe oder Vlies migrieren können, treten aufgrund der hohen molekularen Mobilität bevorzugt bei der Schnellfärbung, aber auch je nach der Temperaturbelastung bei der Normalfärbung auf. Da auch die Carrier die Farbechtheit herabsetzen können, verzichtet man in vielen Fällen auf die Carrier und nimmt längere Färbezeiten in Kauf.

Etwa 20 bis 25 Prozent des eingesetzten Farbstoffs dringen nicht in das Gewebe ein und liegen als überschüssiger Farbstoff vor, der dann durch eine Nachbehandlung auf chemische Weise - beispielsweise durch eine Reduktionsreinigung mit Natronlauge und Hydrosulfit - wieder entfernt werden muß.

Insbesondere für im Automobilbau einzusetzende Kabel - einschließlich der zur Kabelwickelung verwendeten Klebebänder - besteht ein anspruchsvolles Anforderungs- bzw. Belastungsprofil. Zum Nachweis der Erfüllung der bestehenden Anforderungen durch einen Werkstoff sind dabei verschiedene Prüfungen und Tests vorgeschrieben. Zu nennen sind hier zum Beispiel die VW Norm 60306, die Prüfvorschrift der Mercedes Benz AG für Wickelbänder zur Kabelsatzherstellung oder die unter verschiedenen Pkw-Herstellern abgestimmten Normentwürfe LV 112 (Ausgabe Juli 2003) oder LV 312 (Ausgabe April 2004).

Entsprechend diesen Normen muß der Isolationswerkstoff der Leitungen den Anforderungen der VDA 231-106 entsprechen. Die minimalen und maximalen Dauergebrauchstemperaturen (T_{U} und T_{O}) für eine Beanspruchungsdauer von 3 000 h liegen beispielsweise bei einer Einordnung in die Temperaturklasse B bei - 40 °C und bei 100 °C (für PVC als Isolationsmaterial bei 105 °C), wobei das Material einer Kurzzeittemperatur (240 Stunden) von 125 ± 3 °C und einer Überlasttemperatur (6 Stunden) von 150 ± 3 °C standhalten muß.

Zur Bestimmung des Alterungsverhaltens wird zwischen einer Kurzzeitalterung (240 h) und einer Langzeitalterung (3000 h) unterschieden. Anforderungen und Prüfungsbedingungen ergeben sich für beide Tests aus der DIN ISO 6722-1 und -2. Nach der Kurzzeitalterung wird eine Wickelprüfung bei 25 °C und nach der Langzeitalterung eine Wickelprüfung bei Raumtemperatur durchgeführt. Außerdem erfolgt eine Wickelprüfung bei niedriger Temperatur (-40 °C) ebenfalls nach DIN ISO 6722-1 und -2.

Was die Verträglichkeit von Leitungen mit anderen Kabelsatzkomponenten, wie den Kabelwickelbändern, betrifft, so ist hierzu in der LV 112 u.a. eine Prüfung der Medienbeständigkeit vorgesehen, wobei als ein Referenz-Klebeband ein Klebeband der eingangs genannten Art mit der Bezeichnung "Coroplast 837 X" verwendet wird.

Wie die jüngsten Erfahrungen gezeigt haben, können Klebebänder bei den Einzelkabeln eine so starke Verfärbung hervorrufen, daß die Ausgangsfarbe des Einzelkabels nicht mehr erkennbar ist. Es ist damit zu rechnen, dass die einschlägigen Prüfverfahren mit Bezug auf die Verfärbungen ergänzt werden, so dass nennenswerte Verfärbungen in Zukunft nicht mehr zulässig sind. Wenn Leitungen starke Verfärbungen aufweisen, so besteht die Gefahr, dass in einem Servicefall nicht mehr zugeordnet werden kann, welcher Funktion eine Leitung in einem Kabelbaum entspricht.

Die eingangs beschriebenen, bekannten Trägermaterialien werden üblicherweise mit einer Klebebeschichtung aus Schmelzklebstoffen auf der Basis von Natur- oder Synthesekautschuk beschichtet. Derartige Klebebänder werden für Dauertemperaturbelastungen von maximal 100 °C (Zellwollbänder) bis 125 °C (Polyester-Bänder) eingesetzt, was den Temperaturklassen A bis C gemäß der LV 112 entspricht. Im Zuge neuerer Entwicklungen kommen auch Schmelzklebstoffe auf Acrylatbasis zum Einsatz. Diese Klebstoffe haben eine bessere Alterungsbeständigkeit als Kautschukklebstoffe und erlauben daher in Kombination mit geeigneten Trägern den Einsatz der Bänder für die Temperaturklasse 150 °C (Temperaturklasse D). Hinsichtlich der Kompatibilität der Klebstoffe mit dem Trägermaterial und der Klebebänder mit den elektrischen Leitungen, muss dabei davon ausgegangen werden, dass die eingesetzten Klebstoffe zu Wechselwirkungen mit den eingesetzten Farbstoffen des Trägermaterials oder dessen Komponenten und zur Beeinflussung der Migration dieser Komponenten durch die Klebstoffschicht hindurch in die Aderisolierung der Leitungen führen.

Auf Grund ihrer hohen Flexibilität, ihren exzellenten geräuschdämpfenden Eigenschaften und ihrer hinsichtlich eines hohen Abriebschutzes günstigen Eigenschaften ist es wünschenswert, Klebebänder mit textilen Trägem auch für Anwendungsfälle mit hoher Temperaturbelastung an Stelle von Folienklebebändem oder Wellrohren einzusetzen. Für diese hohen Temperaturbelastungen stellt aber die oben beschriebene Farbstoffmigration, insbesondere bei PET-Gewebe, ein Problem dar.

Aus der WO 03/033611 A1, die sich primär mit einem zumindest bereichsweise erfolgenden Glattschleifen (Chintzen) der Oberfläche des Trägers eines Klebebandes beschäftigt, wie es eingangs genannt ist, wird in allgemeiner Form ausgeführt, dass eine anorganische Pigmentfärbung durch einen Farbzusatz beim Extrudieren sich durch besondere Farbstabilität und Alterungsbeständigkeit auszeichnet. Desgleichen wird auch eine allgemeine Eignung des bekannten glattgeschliffenen Klebebandes als Wickelband zum Ummanteln von Kabeln in Automobilen beschrieben, jedoch wird die Wechselwirkung des Klebebandes mit dem Mantel der zu umhüllenden Leitungen, insbesondere bei erhöhten Temperaturen, wie im Motorraum eines Fahrzeugs, vollkommen unberücksichtigt gelassen.

Der vorliegenden Erfindung liegt die Aufgabe zugrunde, einen Kabelbaum der eingangs beschriebenen Art zu schaffen, der bei erhöhten Temperaturbelastungen eine signifikant verringerte Eigenver- bzw. -entfärbung des Klebebandes sowie vor allem insbesondere auch verringerte Verfärbung der zu umwickelten Materialien und damit eine verbesserte Kompatibilität mit den zu verklebenden Materialien, insbesondere Kabelsätzen, aufweist.

Erfindungsgemäß wird dies mit einem Kabelbaum gemäß Anspruch 1 erreicht, wobei erfindungsgemäß ein Klebeband gemäß Anspruch 13 verwendet werden kann.

Der erfindungsgemäße Kabelbaum besteht somit aus mit jeweils einem Mantel versehenen Adern, die mit einem technischen Klebeband ummantelt sind, wobei das Klebeband einen bandförmigen, textilen, gefärbten Träger aufweist. Dieser ist aus Fäden oder Fasern gebildet, die unter Zugabe von Farbpigmenten in ein Extrudat eines Polymers hergestellt sind, und weist eine ein- oder beidseitig aufgetragene Klebebeschichtung auf. Ein zu einer Spinndüsenfärbung der Fäden oder Fasern des Trägers aufgeschmolzenes Polymer ist dabei eine Spinnmasse, welche als Farbpigmente Stoffe enthält, deren Mobilität und Farbstoffmigration durch Einbindung in eine durch das Polymer gebildete Matrix gehemmt ist. Diese Hemmung ist derart, und das Material des Mantels der Adern und das Klebeband weisen miteinander eine derartige Langzeit-Kompatibilität auf, dass sich bei einer 240 Stunden einwirkenden Temperatur von mindestens 125 °C weder das Klebeband, noch der Mantel verfärben.

Bei der Spinndüsenfärbung wird zunächst ein zur Herstellung von Fasern eingesetztes Polymer aufgeschmolzen. Um eine Spinnmasse zu erzeugen, werden Additive, wie Antioxidantien und Farbpigmente, zu dem aufgeschmolzenen Polymer zugegeben. Die Spinnmasse, welche zur Herstellung der Fasern verwendet wird, wird in vergleichsweise wenig aufwendiger und technologisch umweltschonender Weise direkt eingefärbt. Anschließend wird die Masse mit Hilfe eines Extruders versponnen und zu Garnen oder Stapelfasern weiterverarbeitet. Vorteilhafterweise ist somit erfindungsgemäß durch den Einsatz von spinndüsengefärbten Garnen oder Fasern als Trägermaterial des Klebebandes der Farbstoff schon durch den Herstellungsprozess der Fasern selbst derart in die Polymermatrix eingebunden, daß es später bei einer Lagerung oder Beanspruchung des Klebebandes bei erhöhten Temperaturen nicht zu einer Entfärbung des textilen Materials oder zu einer Farbstoffmigration kommen kann.

Ein weiterer Vorteil der Erfindung besteht darin, daß keine Farbbestandteile vorhanden sind, wie sie beim Dispersionsfärben allgemein unter dem Begrifff "niedermolekular" subsumiert werden, die die Kompatibilität des erfindungsgemäßen Klebebandes mit dem Leitungsmaterial herabsetzen können, da die Mobilität aller Farbbestandteile durch die Einbindung in die Polymermatrix gehemmt ist.

Die Vorteilhaftigkeit der Erfindung zeigt sich dabei im Besonderen, wenn der Träger, zumindest teilweise, aus einem Polyester, wie PET, oder einem Polyamid, wie PA 66, besteht. Hierbei ist es auch möglich, daß der Träger aus mehreren Garnen synthetischer Fasern oder einem, insbesondere aus PET/PA bestehenden, Mischfasergarn besteht.

Die Garne können in glatter oder texturierter Form als Filamentgarne oder als Stapelfasergarne vorliegen. Bevorzugt ist dabei ein Flächengewicht des Trägers im Bereich von 20 bis 200 g/m², vorzugsweise von 40 bis 120 g/m², welches in optimaler Weise in Kombination mit einem Auftragungsgewicht des Haftklebstoffs von 20 bis 150 g/m² zur Anwendung kommen kann.

Als Haftklebstoff kann in an sich bekannter Weise ein handelsüblicher Klebstoff auf der Basis von Synthesekautschuken zum Einsatz kommen. Überraschenderweise hat sich aber auch gezeigt, daß der Haftklebstoff auch aus einem oder mehreren, insbesondere unter der Einwirkung von UV- oder Elektronenstrahlen, vernetzbaren Acrylat(en) bestehen kann, wobei - sowohl beim alleinigen Einsatz von üblichen Elektronenquellen oder reinen Quecksilber-Mitteldruckstrahlern als Strahlungsquellen, als auch dann, wenn zumindest ein Teil der eingesetzten UV-Lampen zusätzlich oder alternativ aus vorzugsweise mit Eisen, Blei oder Gallium dotierten Strahlern bestand - es nicht, wie aus der Erfahrung mit dispersionsgefärbten textilen Trägern zu erwarten gewesen wäre, zu einem ungünstigen Strahlungseinfluß auf den Farbstoff des Trägers kam.

Das erfindungsgemäße Klebeband eignet sich in vorzüglicher Weise für eine Verwendung zum Umwickeln von Kabelsätzen, da es nicht nur die an die Temperaturklassen A und B, sondern auch die an die Temperaturklassen C und D gestellten Anforderungen gemäß der LV 112 / LV 312 und den entsprechenden Werksnormen für Wickelbänder erfüllt und eine hohe Langzeit-Kompatibilität mit den meisten Ader-Isolationsmaterialien aufweist. Eine hohe Kompatibilität mit den Leitungen ist insbesondere dann gegeben, wenn bei dem Kabelsatz Leitungen eingesetzt werden, die mit PVC, XPE, PP, FEP oder ETFE ummantelt sind.

Weitere vorteilhafte Ausgestaltungsmerkmale der Erfindung sind in den Unteransprüchen sowie der folgenden Beschreibung enthalten.

Anhand zweier in der beiliegenden Zeichnung dargestellter Ausführungsbeispiele wird die Erfindung näher erläutert.

Dabei zeigen:
- Fig. 1: eine Darstellung eines mit einem erfindungsgemäßen technischen Klebeband umwickelten Kabelbaumes,
- Fig. 2: ein technologisches Schema der Herstellung von Fasern für den Träger eines erfindungsgemäßen technischen Klebebandes,
- Fig. 3: eine Darstellung zur Veranschaulichung des Testverfahrens, dem die in den Beispielen beschriebenen erfindungsgemäßen technischen Klebebänder unterzogen wurden.

In den verschiedenen Figuren der Zeichnung sind gleiche Teile stets auch mit den gleichen Bezugszeichen versehen, so daß sie in der Regel auch jeweils nur einmal beschrieben werden.

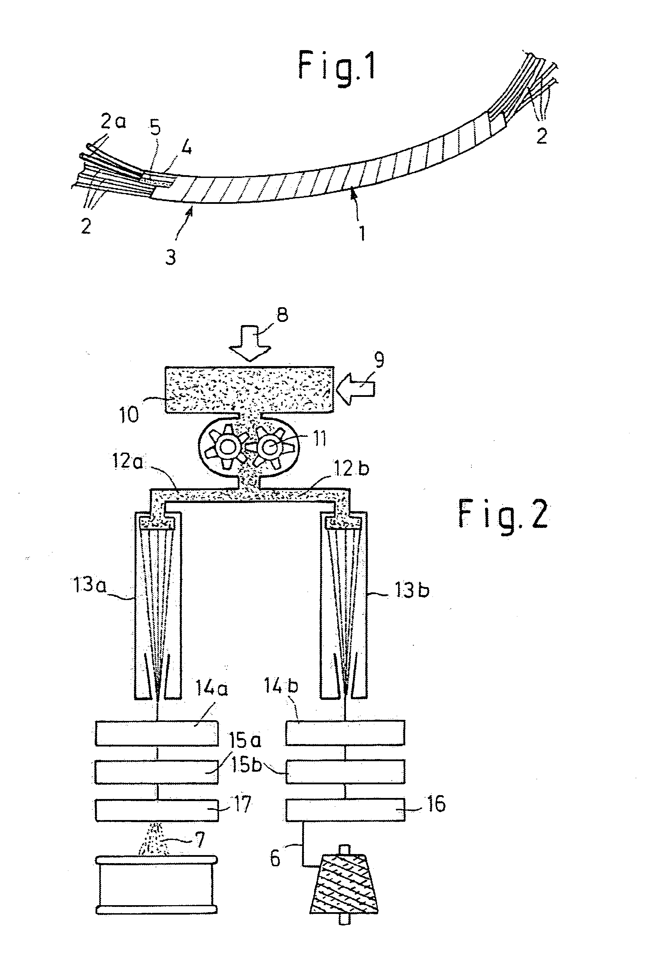

Wie zunächst Fig. 1 veranschaulicht, die einen bevorzugten Anwendungsfall eines erfindungsgemäßen Klebebandes 1 zum Umwickeln von Kabelsätzen zeigt, eignet sich ein erfindungsgemäßes Klebeband mit Vorteil dazu, Adern 2 elektrischer Leitungen zu ummanteln, wodurch ein Kabelbaum 3, insbesondere für die Automobilindustrie, hergestellt werden kann.

Das erfindungsgemäße Klebeband 1 umfaßt dabei einen bandförmigen textilen gefärbten Träger 4 und eine einseitig auf den Träger 4 aufgetragene, aus einem Haftklebstoff bestehende Klebebeschichtung 5. Erfindungsgemäß besteht der textile Träger 4 aus spinndüsengefärbten Fäden 6 oder Fasern 7.

Die Herstellung dieser Fäden 6 oder Fasern 7 wird durch Fig. 2 schematisch veranschaulicht. Fig. 2 zeigt dabei im Einzelnen, daß aus einem polymeren Rohstoff 8 unter Zugabe von Farbpigmenten 9 durch Aufschmelzen zunächst eine Spinnmasse 10 erzeugt wird, wobei die Spinnmasse 10 als Additive neben den Farbpigmenten 9, bei denen es sich zur Erzeugung einer Schwarzfärbung insbesondere um rußbasierende Stoffe handeln kann, auch Antioxidantien und/oder Verarbeitungshilfsmittel enthalten kann. Die Spinnmasse 10, welche zur Herstellung der Fäden 6 und Fasern 7 verwendet wird, wird somit direkt eingefärbt. Die Spinnmasse 10 gelangt in der dargestellten Ausführung unter Einsatz einer Zahnradpumpe 11 über zwei Förderstränge 12a, 12b jeweils zur Verspinnung 13a, 13b, an die sich jeweils nacheinander die Verfahrensschritte Strecken und Kräuseln anschließen, die durch die in der Zeichnung mit den Bezugszeichen 14a, 14b und 15a, 15b bezeichneten Kästen symbolisiert sind. An das Kräuseln 15a, 15b schließt sich dann zur Herstellung der Fäden 6 ein Verfahrensschritt des Aufspulens 16 an, während zur Herstellung der Fasern 7 ein Schneiden 17 vorgesehen ist. Die derart hergestellten gefärbten Fäden 6 oder Fasern 7 dienten zur Herstellung des Trägers 4 des erfindungsgemäßen Klebebandes 1.

### Beispiel 1

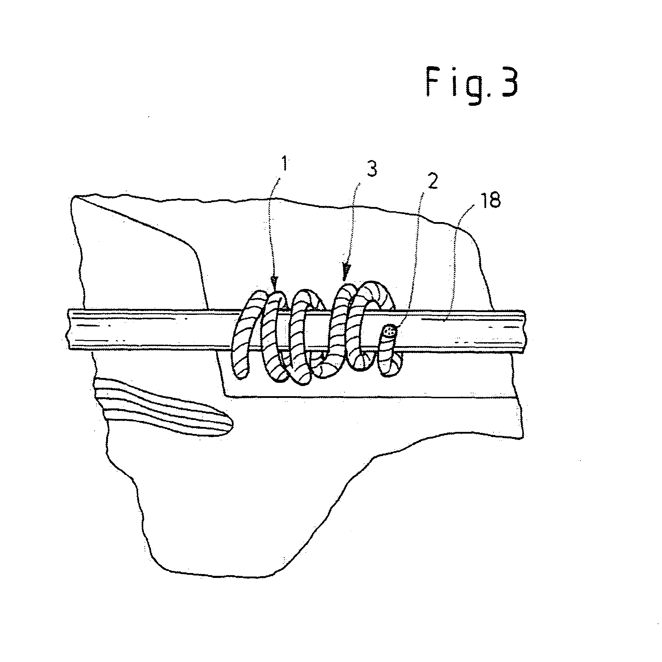

Ein schwarzes, spinndüsengefärbtes, als Träger 4 des erfindungsgemäßen Klebebandes dienendes PET-Gewebe wurde mit einem Acrylatklebstoff beschichtet. Dieser wurde mittels UV-Stahlung vernetzt und bildete so eine haftklebende Klebebeschichtung 5 auf dem Träger 4. Das beschichtete Gewebe wurde dann auf sich selbst gewickelt und anschließend zu Klebebandrollen konfektioniert. Mit dem derart hergestellten Klebeband 1 wurde ein aus mehreren Adern 2 bestehender Leitungssatz umwickelt, wobei die Adern 2 einen aus PVC bestehenden Mantel aufwiesen, der in Fig. 1 mit dem Bezugszeichen 2a angedeutet ist. Der entstandene Kabelbaum 3 wurde, wie Fig. 3 zeigt, um einen Dorn 18 gewickelt und einem Alterungstest unterzogen. Die Alterung erfolgte dabei 10 Tage (240 h) lang bei einer Temperatur von 125 °C.

Zum Vergleich wurde auch ein bekanntes, dispersionsgefärbtes PET-Gewebeklebeband einer Alterung unter den gleichen Bedingungen unterworfen.

Die Sichtprüfung nach der Alterung ergab, daß das erfindungsgemäße Klebeband unverändert schwarz war. Weder die Klebebeschichtung 5, noch die Leitungsisolation 2a der Adern 2 zeigten eine Farbveränderung.

Das unter gleichen Bedingungen hergestellte und verarbeitete Klebeband mit dem konventionellen, dispersionsgefärbten PET-Gewebeträger zeigte nach der Alterung bereits eine leichte Verfärbung sowohl der Klebebeschichtung als auch der Leitungsisolation.

### Beispiel 2

Ein schwarzer spinndüsengefärbter Träger 4 aus PET-Gewebe wurde zur Bildung einer Klebebeschichtung 5 mit einem Acrylatklebstoff beschichtet. Der Klebstoff wurde mittels UV-Stahlung vernetzt. Das beschichtete Gewebe wurde auf sich selbst gewickelt und anschließend zu Klebebandrollen konfektioniert. Mit einem derart hergestellten Klebeband 1 wurde ein aus mehreren Adern 2 bestehender ETFE-Leitungssatz unter Bildung eines Kabelbaums 3 umwickelt und 10 Tage bei 175 °C gealtert. Während nach diesem beschleunigten Alterungstest der Träger 4 des erfindungsgemäßen, spinndüsengefärbten Klebebandes 1 unverändert schwarz war und weder die Klebebeschichtung 5 noch die Leitungsisolation 2a eine Farbverände rung zeigten, hatte sich ein gleichartig, jedoch mit einem konventionellen dispersionsgefärbten PET-Gewebeträger hergestelltes und verarbeitetes Klebeband unter diesen Bedingungen bereits vollständig entfärbt. Wie beim ersten Ausführungsbeispiel wies der Mantel 2a bei Verwendung des erfindungsgemäßen Klebebandes 1 keinerlei Risse, Brüche oder andere funktionsrelevanten Beschädigungen auf. Im Übrigen erfüllte die Isolierung die eingangs beschriebenen Forderungen der LV 112.

Die Erfindung ist nicht auf die beschriebenen Ausführungsbeispiele beschränkt, sondern umfaßt auch alle im Sinne der Erfindung gleichwirkenden Ausführungen. So fällt auch ein Klebeband 1 mit doppelseitiger Beschichtung des Trägers 4 in den Bereich der Erfindung. Es ist auch möglich, den Träger 4 aus einem spinndüsengefärbten Spinnvlies oder einem Spinnfaservlies herzustellen, wobei zur Verfestigung des Vlieses insbesondere ein Nähen, Nadeln oder einer Wasserstrahlverfestigung vorgesehen werden kann.

### Bezugszeichen

- 1: Klebeband
- 2: Ader
- 2a: Mantel von 2
- 3: Kabelbaum
- 4: Träger von 1 für 5
- 5: Klebebeschichtung von 1 auf 4
- 6: Faden von 4
- 7: Fasern von 4
- 8: Rohstoff für 6, 7
- 9: Farbpigmente für 6, 7
- 10: Spinnmasse aus 8, 9
- 11: Pumpe
- 12a, 12b: Förderstränge für 10
- 13a, 13b: Verfahrensschritt Verspinnung von 10
- 14a, 14b: Verfahrensschritt Strecken
- 15a, 15b: Verfahrensschritt Kräuseln
- 16: Verfahrensschritt Aufspulen
- 17: Verfahrensschritt Schneiden
- 18: Dom

## Patentansprüche

1. Kabelbaum (3), bestehend aus mit jeweils einem Mantel (2a) versehenen Adern (2), die mit einem technischen Klebeband (1) ummantelt sind, wobei das Klebeband (1) einen bandförmigen, textilen, gefärbten Träger (4), der aus Fäden (6) oder Fasern (7) gebildet ist, die unter Zugabe von Farbpigmenten in ein Extrudat eines Polymers hergestellt sind, und eine ein- oder beidseitig auf den Träger (4) aufgetragene Klebebeschichtung (5) aufweist, wobei das zu einer Spinndüsenfärbung der Fäden (6) oder Fasern (7) des Trägers (4) aufgeschmolzene Polymer eine Spinnmasse (10) ist, welche als Farbpigmente Stoffe enthält, deren Mobilität und Farbstoffmigration durch Einbindung in eine durch das Polymer gebildete Matrix derart gehemmt ist und das Material des Mantels (2a) der Adern (2) und das Klebeband (1) miteinander eine derartige Langzeit-Kompatibilität aufweisen, dass sich bei einer 240 Stunden einwirkenden Temperatur von mindestens 125°C weder das Klebeband (1), noch der Mantel (2a) verfärben.

2. Kabelbaum nach Anspruch 1,
**dadurch gekennzeichnet, dass** die Spinnmasse (10) als Farbpigmente Stoffe enthält, deren Mobilität und Farbstoffmigration durch die Einbindung in die Polymermatrix derart gehemmt ist, dass sich bei einer 240 Stunden einwirkenden Temperatur von mindestens 175°C weder das Klebeband (1), noch der Mantel (2a) verfärben.

3. Kabelbaum nach Anspruch 1 oder 2,
**dadurch gekennzeichnet, dass** der Träger (4) des Klebebandes (1) aus einem oder mehreren Gam(en) synthetischer Fasern besteht.

4. Kabelbaum nach einem der Ansprüche 1 bis 3,
**dadurch gekennzeichnet, dass** der Träger (4) des Klebebandes (1), zumindest teilweise, aus einem Polyester besteht.

5. Kabelbaum nach einem der Ansprüche 1 bis 4,
**dadurch gekennzeichnet, dass** der Träger (4) des Klebebandes (1), zumindest teilweise, aus einem Polyamid (PA) besteht.

6. Kabelbaum nach einem der Ansprüche 1 bis 5,
**dadurch gekennzeichnet, dass** der Träger (4) des Klebebandes (1) aus einem, aus Polyethylenterephtalat (PET) und Polyamid (PA) bestehenden, Mischfasergarn besteht.

7. Kabelbaum nach einem der Ansprüche 1 bis 6,
**dadurch gekennzeichnet, dass** der Träger (4) des Klebebandes (1) aus Filamentgarnen besteht.

8. Kabelbaum nach einem der Ansprüche 1 bis 7,
**dadurch gekennzeichnet, dass** der Träger (4) des Klebebandes (1) aus texturierten Garnen besteht.

9. Kabelbaum nach einem der Ansprüche 1 bis 8,
**dadurch gekennzeichnet, dass** der Träger (4) des Klebebandes (1) ein Flächengewicht im Bereich von 20 - 200 g/m², vorzugsweise 40 - 120 g/m², aufweiset.

10. Kabelbaum nach einem der Ansprüche 1 bis 9,
**dadurch gekennzeichnet, dass** der Haftklebstoff aus einem oder mehreren unter der Einwirkung von UV- oder Elektronenstrahlen, vernetzbaren Acrylat(en) besteht.

11. Kabelbaum nach einem der Ansprüche 1 bis 9,
**dadurch gekennzeichnet, dass** der Haftklebstoff ein Klebstoff auf der Basis eines Synthesekautschuks ist.

12. Kabelbaum nach einem der Ansprüche 1 bis 11,
**dadurch gekennzeichnet, dass** der Haftklebstoff mit einem Gewicht von 20 -150 g/m² aufgetragen ist.

13. Verwendung eines Klebebandes (1) mit einem bandförmigen, textilen, gefärbten Träger (4), der aus Fäden (6) oder Fasern (7) gebildet ist, die unter Zugabe von Farbpigmenten in ein Extrudat eines Polymers hergestellt sind, und mit einer ein- oder beidseitig auf den Träger (4) aufgetragenen Klebebeschichtung (5), zum Ummanteln eines Kabelbaums (3), bestehend aus mit jeweils einem Mantel (2a) versehenen Adern (2), wobei das zu einer Spinndüsenfärbung der Fäden (6) oder Fasern (7) des Trägers (4) aufgeschmolzene Polymer eine Spinnmasse (10) ist, welche als Farbpigmente Stoffe enthält, deren Mobilität und Farbstoffmigration durch Einbindung in eine durch das Polymer gebildete Matrix derart gehemmt ist und das Material des Mantels (2a) der Adern (2) und das Klebeband (1) miteinander eine derartige Langzeit-Kompatibilität aufweisen, dass sich bei einer 240 Stunden einwirkenden Temperatur von mindestens 125°C weder das Klebeband (1), noch der Mantel (2a) verfärben.

14. Verwendung nach Anspruch 13,
**dadurch gekennzeichnet, dass** das Klebeband (1) die Merkmale des kennzeichnenden Teils eines der Ansprüche 2 bis 12 aufweist.

## Claims

1. A cable harness (3) consisting of wires (2), each provided with a sheathing (2a), wrapped with an industrial adhesive tape (1), wherein the adhesive tape (1) has a band-shaped, textile, coloured support (4), formed from threads (6) or fibres (7) manufactured while adding pigments into an extrudate of a polymer, and has an adhesive coating (5) applied to one or both sides of the support (4), wherein the polymer melted for spinning nozzle colouration of the threads (6) or fibres (7) of the support (4) is a spinning material (10) which contains, as pigments, substances whose mobility and colorant migration is, through incorporation into a matrix formed by the polymer, inhibited such that, and the material of the sheathing (2a) of the wires (2) and the adhesive tape (1) have such long-term compatibility with one another that, at a temperature of at least 125°C having an effect over 240 hours neither the adhesive tape (1) nor the sheathing (2a) discolour.

2. A cable harness according to claim 1, **characterised in that** the spinning material (10) contains, as pigments, substances whose mobility and colorant migration is inhibited through incorporation into the polymer matrix in such a manner that neither the adhesive tape (1) nor the sheathing (2a) discolour at a temperature of at least 175°C having an effect over 240 hours.

3. A cable harness according to claim 1 or 2, **characterised in that** the support (4) of the adhesive tape (1) is composed of one or more yarns of synthetic fibres.

4. A cable harness according to any one of claims 1 to 3, **characterised in that** the support (4) of the adhesive tape (1) is at least partially composed of a polyester.

5. A cable harness according to any one of claims 1 to 4, chararacterised in that the support (4) of the adhesive tape (1) is at least partially composed of a polyamide (PA).

6. A cable harness according to any one of claims 1 to 5, **characterised in that** the support (4) of the adhesive tape (1) is composed of a mixed-fibre yarn composed of polyethylene terephthalate (PET) and polyamide (PA).

7. A cable harness according to any one of claims 1 to 6, **characterised in that** the support (4) of the adhesive tape (1) is composed of filament yarns.

8. A cable harness according to any one of claims 1 to 7, **characterised in that** the support (4) of the adhesive tape (1) is composed of textured yarns.

9. A cable harness according to any one of claims 1 to 8, **characterised in that** the support (4) of the adhesive tape (1) has a mass per unit area in the range of 20 - 200 g/m², preferably 40-120 g/m².

10. A cable harness according to any one of claims 1 to 9, **characterised in that** the pressure sensitive adhesive is composed of one or a plurality of acrylates cross-linkable under the action of UV rays or electron beams.

11. A cable harness according to any one of claims 1 to 9, **characterised in that** the pressure sensitive adhesive is a synthetic-rubber-based adhesive.

12. A cable harness according to any one of claims 1 to 11, **characterised in that** the pressure sensitive adhesive is applied with a weight of 20 - 150g/m².

13. Use of an adhesive tape (1) with a band-shaped, textile, coloured support (4) formed from threads (6) or fibres (7) manufactured while adding pigments into an extrudate of a polymer, and having a one-sided or two-sided adhesive coating (5), applied to the support (4), for wrapping around a cable harness (3) consisting of wires (2) each provided with a sheathing (2a), wherein the polymer melted for spinning nozzle colouration of the threads (6) or fibres (7) of the support (4) is a spinning material (10) which contains, as pigments, substances whose mobility and colorant migration is, through incorporation into a matrix formed by the polymer, inhibited such that, and the material of the sheathing (2a) of the wires (2) and the adhesive tape (1) have such long-term compatibility with one another that, neither the adhesive tape (1) nor the sheathing (2a) discolour at a temperature of at least 125°C having an effect over 240 hours.

14. Use according to claim 13, **characterised in that** the adhesive tape (1) has the features of the characterizing part of one of claims 2 to 12.

## Revendications

1. Faisceau de câbles (3), constitué de brins (2) dotés respectivement d'une gaine (2a) qui sont enveloppés d'un ruban adhésif technique (1), le ruban adhésif (1) présentant un support (4) teint, textile en forme de bande, qui est formé de fils (6) ou de fibres (7) qui sont fabriqués par ajout de pigments de couleur dans un extrudat d'un polymère, et un revêtement adhésif (5) appliqué d'un côté ou des deux côtés du support (4), le polymère fondu pour une teinture dans la masse des fils (6) ou des fibres (7) du support (4) étant une matière textile (10), qui contient comme pigments de couleur des substances dont la mobilité et la migration des colorants est bloquée par intégration dans une matrice formée par le polymère et le matériau de la gaine (2a) des brins (2) et le ruban adhésif (1) présentant une compatibilité à long terme l'un avec l'autre telle que dans le cas d'une température d'au moins 125°C agissant pendant 240 heures, ni le ruban adhésif (1), ni la gaine (2a) ne changent de couleur.

2. Faisceau de câbles selon la revendication 1,
**caractérisé en ce que** la matière textile (10) contient comme pigments de couleur des substances dont la mobilité et la migration des colorants est bloquée par l'intégration dans une matrice de polymère de telle sorte que dans le cas d'une température d'au moins 175°C agissant pendant 240 heures, ni le ruban adhésif (1), ni la gaine (2a) ne changent de couleur.

3. Faisceau de câbles selon la revendication 1 ou 2,
**caractérisé en ce que** le support (4) du ruban adhésif (1) se compose d'un ou de plusieurs fil(s) de fibres synthétiques.

4. Faisceau de câbles selon l'une quelconque des revendications 1 à 3,
**caractérisé en ce que** le support (4) du ruban adhésif (1) se compose au moins en partie d'un polyester.

5. Faisceau de câbles selon l'une quelconque des revendications 1 à 4,
**caractérisé en ce que** le support (4) du ruban adhésif (1) se compose au moins en partie d'un polyamide (PA).

6. Faisceau de câbles selon l'une quelconque des revendications 1 à 5,
**caractérisé en ce que** le support (4) du ruban adhésif (1) se compose d'un fil de fibres mélangées constitué de polyéthylène téréphtalate (PET) et de polyamide (PA).

7. Faisceau selon l'une quelconque des revendications 1 à 6,
**caractérisé en ce que** le support (4) du ruban adhésif (1) se compose de fils continus.

8. Faisceau de câbles selon l'une quelconque des revendications 1 à 7,
**caractérisé en ce que** le support (4) du ruban adhésif (1) se compose de fils texturés.

9. Faisceau de câbles selon l'une quelconque des revendications 1 à 8,
**caractérisé en ce que** le support (4) du ruban adhésif (1) a un grammage situé dans la plage allant de 20 à 200 g/m², de préférence de 40 à 120 g/m².

10. Faisceau de câbles selon l'une quelconque des revendications 1 à 9,
**caractérisé en ce que** la colle auto-adhésive se compose d'un ou de plusieurs acrylate(s) réticulable(s) sous l'effet de rayons UV ou de faisceaux électroniques.

11. Faisceau de câbles selon l'une quelconque des revendications 1 à 9, **caractérisé en ce que** la colle auto-adhésive est une colle à base de caoutchouc synthétique.

12. Faisceau de câbles selon l'une quelconque des revendications à 11,
**caractérisé en ce que** la colle auto-adhésive est appliquée avec un poids de 20 à 150 g/m².

13. Utilisation d'un ruban adhésif (1) avec un support (4) teint, textile en forme de bande, qui est formé de fils (6) ou de fibres (7) qui sont fabriqués par ajout de pigments de couleur dans un extrudat d'un polymère, et avec un revêtement adhésif (5) appliqué d'un côté ou des deux côtés du support (4), pour envelopper un faisceau de câbles (3), constitué de brins (2) dotés respectivement d'une gaine (2a), dans lequel le polymère fondu pour une teinture dans la masse des fils (6) ou des fibres (7) du support (4) est une matière textile (10), qui contient comme pigments de couleur des substances dont la mobilité et la migration des colorants est bloquée par intégration dans une matrice formée par le polymère et le matériau de la gaine (2a) des brins (2) et le ruban adhésif (1) présentent une compatibilité à long terme l'un avec l'autre telle que dans le cas d'une température d'au moins 125°C agissant pendant 240 heures, ni le ruban adhésif (1), ni la gaine (2a) ne changent de couleur.

14. Utilisation selon la revendication 13,
**caractérisée en ce que** le ruban adhésif (1) présente les caractéristiques de la partie caractérisante de l'une quelconque des revendications 2 à 12.
